(19) **Europäisches Patentamt European Patent Office Office européen des brevets**

(11) **EP 4 682 207 A1**

(12) **EUROPEAN PATENT APPLICATION**

(43) Date of publication:
**21.01.2026 Bulletin 2026/04**

(21) Application number: **24307099.2**

(22) Date of filing: **13.12.2024**

(51) International Patent Classification (IPC):
**C08L 91/00** (2006.01)    **C08L 91/06** (2006.01)
**C10M 101/04** (2006.01)    **D06M 13/02** (2006.01)
**D06M 13/184** (2006.01)

(52) Cooperative Patent Classification (CPC):
(C-Sets available)
**D06M 13/02; C08L 91/00; C08L 91/06;
D06M 13/07; D06M 13/184; D06M 13/188;
D06M 13/203; D06M 13/2243;** D06M 2101/06;
D06M 2101/12; D06M 2200/40          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TotalEnergies OneTech
92400 Courbevoie (FR)**

(72) Inventors:
• **SWOBODA, Benjamin
69360 SOLAIZE (FR)**
• **PERUMALSAMY, Jayachandran
400710 NAVI MUMBAI (IN)**
• **KHANRA, Sipra
400710 NAVI MUMBAI (IN)**

(74) Representative: **Lavoix
2, place d'Estienne d'Orves
75441 Paris Cedex 09 (FR)**

(54) **BIO-SOURCED COMPOSITION FOR TREATING TEXTILE FIBERS**

(57)    The present invention relates to a composition comprising
- at least one seed extraction oil comprising at least one fatty acid comprising from 8 to 24 carbon atoms, said seed extraction oil having a kinematic viscosity measured at 40°C according to ASTM D445 from 25 $mm^2$/s to 45 $mm^2$/s and
- at least one bio-sourced fluid having a kinematic viscosity measured at 40°C according to ASTM D445 from 3 to 6 $mm^2$/s, a flash point of higher than 120°C and a pour point lower than -40°C, having a boiling point in the range of from 200 °C to 400°C and a boiling range below 80°C, said fluid comprising more than 95% isoparaffins and less than 3% of naphthens by mass, a biocarbon content of at least 95% by mass, containing less than 100 ppm aromatics by mass.

**EP 4 682 207 A1**

(52) Cooperative Patent Classification (CPC): (Cont.)

C-Sets
**C08L 91/00, C08L 91/06;**
**C08L 91/06, C08L 91/00**

**EP 4 682 207 A1**

**Description**

The present invention concerns a bio-sourced composition for treating textile fibers. The present invention also concerns an emulsion comprising said composition and a method for treating textile fibers such as jute fibers.

Jute is a biopolymer mainly composed of cellulose, hemicellulose and lignin, which is widely and abundantly cultivated over the world, especially in southern Asia. Jute fibers are considered as one of the most versatile and affordable natural textile fibers with various uses in different industrial domains such as automotive, pulp and paper, furniture and bedding industries.

The raw jute fibers exhibit important stiffness and harshness properties, which result in their poor smoothness, pliability and flexibility, consequently impairing their process ability. Moreover, they are likely to suffer fiber damages during processing and use.

In this case, it exists a step in the process of jute fiber production, commonly known as the piling/batching stage, in which a jute batching oil is applied on the retted jute in order to improve its pliability and flexibility. Typically, a lubricating oil is mixed with water to form an emulsion before its application on the jute fibers, where water in the emulsion softens the fiber and increases the extensibility, and the oil remains on the fiber surface, preventing evaporation of water and acting as a lubricant in different processing stages.

Traditionally, the jute batching oil is based on fossil oils, which usually comprise toxic and volatile components, such as low aromatic and/or polyaromatic hydrocarbon compounds. As a result, the petroleum-based lubricating oils always have unpleasant odors and exhibit a potential health-hazard, leading to their limited industrial applications and restricted acceptability in the international market.

Therefore, there is a need in providing new batching oils for the process of textile fiber production, in particular for producing jute fibers, in order to substitute the traditional petroleum-based jute batching oils.

The aim of the present invention is thus to provide a composition having eco-friendly properties and a reduced toxicity with respect to the traditional petroleum-based batching oils.

Another aim of the present invention is to provide compositions capable of improving the pliability and flexibility of textile fibers, such as jute fibers, and offering desired lubricant performances in the processing steps of textile fibers.

One aim of the present invention is thus to provide an eco-friendly composition with similar or even improved properties in comparison with the compositions that are usually used for treating textile fibers, especially in comparison with petroleum-based batching oils.

Therefore, the present invention relates to a composition comprising

- at least one seed extraction oil comprising at least one fatty acid comprising from 8 to 24 carbon atoms, said seed extraction oil having a kinematic viscosity measured at 40°C according to ASTM D445 from 25 mm$^2$/s to 45 mm$^2$/s, and preferably from 30 mm$^2$/s to 40 mm$^2$/s; and
- at least one bio-sourced fluid having a kinematic viscosity measured at 40°C according to ASTM D445 from 3 to 6 mm$^2$/s, a flash point of higher than 120°C and a pour point lower than -40°C, preferably lower than -50°C, having a boiling point in the range of from 200 °C to 400°C and a boiling range below 80°C, said fluid comprising more than 95% isoparaffins and less than 3% of naphthens by mass, a biocarbon content of at least 95% by mass, containing less than 100 ppm aromatics by mass.

The compositions according to the invention comprise at least two different bio-sourced fractions. Thus, in contrast to the traditional jute batching oils, the compositions of the invention are more eco-friendly and do not have any unpleasant odor.

The inventors have also shown that the jute fibers treated with the compositions of the invention have comparable process ability, with respect to those fibers treated with the conventional petroleum-based lubricant compositions.

Besides, the inventors have shown that the compositions of the invention allow the formation of an emulsion with an improved stability in comparison to the emulsion prepared with conventional jute-batching oils.

Moreover, the inventors surprisingly found that the viscosity of the compositions according to the invention could be adjusted by modifying the volume ratio of the two different bio-sourced oils. Thus, compositions according to the invention allow a flexible adjustment of the viscosity according to the conditions of the fiber processing.

According to an embodiment, the composition according to the invention has a kinematic viscosity measured at 40°C according to ASTM D445, comprised from 1 mm$^2$/s to 30 mm$^2$/s, preferably from 5 mm$^2$/s to 15 mm$^2$/s, and more preferably from 9 mm$^2$/s to 11 mm$^2$/s.

According to an embodiment, the volume ratio of the seed extraction oil and the bio-sourced fluid is comprised from 0.1 to 10, preferably from 0.5 to 5, more preferably from 0.8 to 1.2, and advantageously is equal to 1.

According to an embodiment, the seed extraction oil is a date seed oil.

According to an embodiment, the seed extraction oil comprises at least one fatty acid selected from the group consisting of: oleic acid ($C_{18}H_{34}O_2$) (C18:1), lauric acid ($C_{12}H_{24}O_2$) (C12:0), palmitic acid ($C_{16}H_{32}O_2$) (C16:0), myristic

3

acid ($C_{14}H_{28}O_2$) (C14:0), linoleic acid ($C_{18}H_{32}O_2$) (C18:2), stearic acid ($C_{18}H_{36}O_2$) (C18:0), and mixtures thereof.

According to an embodiment, the composition according to the invention has a sulfur content of less than 10 ppm, preferably less than 5 ppm, more preferably less than 3 ppm.

According to an embodiment, the composition according to the invention further comprises at least one additive selected from non-ionic surfactants.

According to an embodiment, the amount of non-ionic surfactant(s) ranges from 0.1% to 5%, preferably from 0.5% to 3%, and more preferably from 1% to 2% by mass, based on the total mass of the composition.

According to an embodiment, the composition according to the invention further comprises water.

According to an embodiment, the composition according to the invention is in the form of an emulsion.

The present invention also concerns an emulsion comprising the composition as defined above and water.

The present invention further concerns the use of the composition as defined above, or of the emulsion as defined above, for treating textile fiber in particular in a process for production of textile fiber.

According to an embodiment, the textile fiber is selected from the group consisting of jute, wool, linen, and cotton fibers.

According to an embodiment, the textile fiber is jute fiber.

The present invention also concerns a process for treating textile fibers comprising a step of applying the composition as defined above or the emulsion as defined above, on textile fibers.

*Seed extraction oil*

As mentioned above, the composition according to the invention comprises at least one seed extraction oil comprising at least one fatty acid comprising from 8 to 24 carbon atoms, said seed extraction oil having a kinematic viscosity measured at 40°C according to ASTM D445 from 25 $mm^2$/s to 45 $mm^2$/s, and preferably from 30 $mm^2$/s to 40 $mm^2$/s.

The term "seed extraction oil" refers to an oil that is obtained by extraction from seeds of plants. The oil extraction is typically done using methods well known from the skilled person such as mechanical pressing or using chemical solvents. The seeds used may include sunflower, sesame, canola, soybean, and date.

According to an embodiment, the seed extraction oil comprises at least one fatty acid comprising from 8 to 24 carbon atoms and its derived esters, in particular, the derived triglycerides. The seed extraction oil may thus include free fatty acids, fatty acids in esterified form or a mixture thereof.

The fatty acids of the seed extraction oil are preferably selected from linear or branched, saturated or unsaturated, fatty acids comprising from 8 to 36 carbon atoms.

Preferably, the fatty acids are linear or branched, saturated or unsaturated, fatty acids comprising from 8 to 24 carbon atoms, more preferably from 12 to 20 carbon atoms.

According to an embodiment, the seed extraction oil comprises at least one fatty acid selected from the group consisting of: oleic acid ($C_{18}H_{34}O_2$) (C18:1), lauric acid ($C_{12}H_{24}O_2$) (C12:0), palmitic acid ($C_{16}H_{32}O_2$) (C16:0), myristic acid ($C_{14}H_{28}O_2$) (C14:0), linoleic acid ($C_{18}H_{32}O_2$) (C18:2), stearic acid ($C_{18}H_{36}O_2$) (C18:0), and mixtures thereof.

Preferably, the seed extraction oil according to the invention comprises oleic acid (C18:1), lauric acid (C12:0), palmitic acid (C16:0), myristic acid (C14:0), linoleic acid (C18:2), stearic acid (C18:0), and mixtures thereof.

According to an embodiment, the seed extraction oil comprises at least 10% by mass, preferably at least 20% by mass, and more preferably at least 30% by mass of fatty acids with 18 carbon atoms, with respect to the total mass of the seed extraction oil.

According to an embodiment, the seed extraction oil according to the invention comprises from 20% to 60%, preferably from 25% to 55%, and even more preferably from 30% to 50%, of oleic acid by mass relative to the total mass of the fatty acids in said seed extraction oil.

According to an embodiment, the seed extraction oil according to the invention comprises from 5% to 35%, preferably from 10% to 20%, more preferably from 10% to 18%, and even more preferably from 12% to 17%, of lauric acid by mass relative to the total mass of the fatty acids in said seed extraction oil.

According to an embodiment, the seed extraction oil according to the invention comprises from 7.0% to 16%, preferably from 7.0% to 10%, and more preferably from 7% to 8%, of palmitic acid by mass relative to the total mass of the fatty acids in said seed extraction oil.

According to an embodiment, the seed extraction oil according to the invention comprises from 3% to 16%, preferably from 5% to 10%, and more preferably from 6.5% to 11.0%, of myristic acid by mass relative to the total mass of the fatty acids in said seed extraction oil.

According to an embodiment, the seed extraction oil according to the invention comprises from 0.1% to 20.0%, preferably from 9% to 20%, and more preferably from 10% to 15%, of linoleic acid by mass relative to the total mass of the fatty acids in said seed extraction oil.

According to an embodiment, the seed extraction oil according to the invention comprises from 1.5% to 6.0%, preferably from 2.5% to 4%, and more preferably from 3% to 3.5%, of stearic acid by mass relative to the total mass of the fatty acids in said seed extraction oil.

According to an embodiment, the seed extraction oil is a seed extraction oil selected from date seed oil, sunflower seed oil, canola seed oil, custard apple seed oil, grape seed oil, cottonseed oil, rapeseed oil, sesame seed oil, linseed oil or their mixture. Preferably, the seed extraction oil is a date seed oil.

The seed extraction oil according to the invention has a kinematic viscosity at 40°C from 25 $mm^2$/s to 45 $mm^2$/s, and preferably from 30 $mm^2$/s to 40 $mm^2$/s. According to a preferred embodiment, said kinematic viscosity at 40°C is 35 $mm^2$/s.

The kinematic viscosity at 40°C of the seed extraction oil is for example measured according to ASTM D445 standard.

According to an embodiment, the seed extraction oil according to the invention has a flash point from 140°C to 300°C, and preferably from 250°C to 320°C, and in particular from 280°C to 315°C.

The composition according to the invention has thus preferably a very high flash point indicating safe limits while handling.

The flash point of the oil is for example measured according to ASTM 93 standard.

According to an embodiment, the seed extraction oil according to the invention has a pour point from -10°C to 10°C, and preferably from 0°C to 10°C.

The pour point is for example measured according to ASTM D97 standard.

According to an embodiment, the seed extraction oil according to the invention has a boiling point from 396°C to 637°C.

The boiling point of the oil is for example measured according to ASTM D86 as well as D2887 standard.

According to a preferred embodiment, the seed extraction oil according to the invention has a sulfur content of less than 10 ppm, preferably less than 7 ppm, even more preferably less than 4 ppm.

The sulfur content of the oil is for example measured according to ASTM D4294 standard.

*Bio-sourced fluid*

As mentioned above, the composition according to the invention comprises also at least one bio-sourced fluid having a kinematic viscosity measured at 40°C according to ASTM D445 from 3 to 6 $mm^2$/s, a flash point of higher than 120°C and a pour point lower than -40°C, preferably lower than -50°C, having a boiling point in the range of from 200°C to 400°C and a boiling range below 80°C, said fluid comprising more than 95% isoparaffins and less than 3% of naphthens by mass, a biocarbon content of at least 95% by mass, containing less than 100 ppm aromatics by mass.

According to the invention, the bio-sourced fluid refers to fluids derived from biological sources, especially from renewable organic matter, including plant-based materials. These oils are obtained through processes such as extraction, pressing, or chemical treatment of seeds, fruits or other botanical components. Examples of bio-sourced oils include oils extracted from seeds (e.g. date seed oil, sunflower oil, soybean oil), fruits (e.g. palm oil, coconut oil), and other parts of plants.

As well understood by the skilled person, a boiling range below 80°C means that the difference between the final boiling point and the initial boiling point is less than 80°C.

According to an embodiment, the pour point of the bio-sourced fluid is lower than -50°C.

The bio-sourced fluid as defined above and having a boiling point in the range of from 200 to 400°C and comprising more than 95% isoparaffins and containing less than 100 ppm aromatics by weight, is obtainable by a process comprising the step of catalytically hydrogenating a feed comprising more than 95% by weight of a hydrodeoxygenated isomerized hydrocarbon biomass feedstock or a feed comprising more than 95% by weight of a feedstock originating from syngas, at a temperature from 80 to 180°C, at a pressure from 50 to 160 bars, a liquid hourly space velocity of 0.2 to 5 $hr^1$ and an hydrogen treat rate up to 200 $Nm^3$/ton of feed.

According to a first variant, the feed comprises more than 98%, preferably more than 99% of a hydrodeoxygenated isomerized hydrocarbon biomass feedstock, and more preferably consists of a hydrodeoxygenated isomerized hydrocarbon biomass feedstock. According to an embodiment, the biomass is a vegetable oil, an ester thereof or a triglyceride thereof. According to an embodiment, the feed is a NEXBTL feed.

According to second variant, the feed comprises more than 98%, preferably more than 99% of a feedstock originating from syngas. According to an embodiment, the feedstock originates from renewable syngas.

According to an embodiment, the hydrogenation conditions of the process are the following:

- Pressure: 80 to 150 bars, and preferably 90 to 120 bars;
- Temperature: 120 to 160°C and preferably 150 to 160°C;
- Liquid hourly space velocity (LHSV) : 0.4 to 3, and preferably 0.5 to 0.8 $hr^{-1}$;
- Hydrogen treat rate be up to 200 $Nm^3$/ton of feed.

According to an embodiment, a fractionating step is carried out before the hydrogenating step, or after the hydrogenating step or both; according to an embodiment, the process comprises three hydrogenation stages, preferably in three separate reactors.

The bio-sourced fluid as mentioned above is thus a fluid having a boiling point in the range of from 200 to 400°C and a boiling range below 80°C, said fluid comprising more than 95% isoparaffins and less than 3% of naphthens by weight, a biodegradability at 28 days of at least 60%, as measured according to the OECD 306 standard, a biocarbon content of at least 95% by weight, containing less than 100 ppm aromatics by weight, and preferably comprising carbon expressed as $CH_3$ sat less than 30%.

According to an embodiment, the fluid has a boiling point in the range 150°C to 400°C, preferably from 200°C to 400°C, especially 220°C to 340°C and advantageously more than 240°C and up to 340°C.

The boiling point can be measured according to well-known methods for the skilled person. As an example, the boiling point can be measured according to ASTM D86 standard.

According to an embodiment, the fluid has a boiling range below 80 °C, preferably below 60°C, more preferably between 35 and 50°C, advantageously between 40 and 50°C.

According to an embodiment, the fluid contains less than 50 ppm aromatics, and preferably less than 20 ppm by weight.

According to an embodiment, the fluid contains less than 3% by weight of naphthens by weight, preferably less than 1% and advantageously less than 500 ppm and even less than 50 ppm.

According to an embodiment, the fluid contains less than 5 ppm, even less than 3 ppm and preferably less than 0.5 ppm sulphur.

According to an embodiment, the fluid comprises more than 98% isoparaffins by weight.

According to an embodiment, the fluid has a ratio of iso-paraffins to n-paraffins of at least 20:1.

According to an embodiment, the fluid comprises more than 95% by weight, of molecules with from 14 to 18 carbon atoms as isoparaffins, preferably comprises by weight, from 60 to 95%, more preferably 80 to 98%, of isoparaffins selected from the group consisting of C15 isoparaffins, C16 isoparaffins, C17 isoparaffins, C18 isoparaffins and mixtures of two or more thereof.

According to an embodiment, the fluid comprises:

- C15 isoparaffins and C16 isoparaffins in a combined amount of 80 to 98%; or
- C16 isoparaffins, C17 isoparaffins and C18 isoparaffins in a combined amount of 80 to 98%; or
- C17 isoparaffins and C18 isoparaffins in a combined amount of 80 to 98%.

According to an embodiment, the fluid exhibits one or more, preferably all of the following features:

- the fluid comprises carbon expressed as Cquat less than 3%, preferably less than 1% and more preferably about 0%;
- the fluid comprises carbon expressed as CH sat less than 20%, preferably less than 18% and more preferably less than 15%;
- the fluid comprises carbon expressed as $CH_2$ sat more than 40%, preferably more than 50% and more preferably more than 60%;
- the fluid comprises carbon expressed as $CH_3$ sat less than 30%, preferably less than 28% and more preferably less than 25%;
- the fluid comprises carbon expressed as $CH_3$ long chain less than 20%, preferably less than 18% and more preferably less than 15%;
- the fluid comprises carbon expressed as $CH_3$ short chain less than 15%, preferably less than 10% and more preferably less than 9%.

The amount of isoparaffins, naphthens and/or aromatics can be determined according to any known methods for the skilled person. Among those methods, mention may be made of gas chromatography.

According to an embodiment, the fluid has a biodegradability at 28 days of at least 60%, preferably at least 70%, more preferably at least 75% and advantageously at least 80%, as measured according to the OECD 306 standard.

According to an embodiment, the fluid has a biocarbon content of at least 95% by weight, preferably at least 97%, more preferably at least 98%, and even more preferably about 100%.

The feedstock as mentioned above or simply feed may, according a first variant, be a feed which is the result of a process of hydrodeoxygenation followed by isomerization, hereafter "HDO/ISO", as practiced on a biomass.

This HDO/ISO process is applied on biological raw materials, the biomass, selected from the group consisting of vegetable oils, animal fats, fish oils, and mixtures thereof, preferably vegetable oils. Suitable vegetable raw materials include rapeseed oil, canola oil, colza oil, tall oil, sunflower oil, soybean oil, hemp oil, olive oil, linenseed oil, mustard oil, palm oil, arachis oil, castor oil, coconut oil, animal fats such as suet, tallow, blubber, recycled alimentary fats, starting materials produced by genetic engineering, and biological starting materials produced by microbes such as algae and bacteria. Condensation products, esters, or other derivatives obtained from biological raw materials may also be used as starting materials. An especially preferred vegetable raw material is an ester or triglyceride derivative. This material is submitted to an hydrodeoxygenation (HDO) step for decomposing the structure of the biological ester or triglyceride constituent, and for removing oxygen, phosphorus and sulfur (part of) compounds, concurrently hydrogenating the olefinic bonds, followed by isomerization of the product thus obtained, thus branching the hydrocarbon chain and improving the low temperature properties of the thus-obtained feedstock.

In the HDO step, hydrogen gas and the biological constituent are passed to the HDO catalyst bed either in countercurrent or concurrent manner. In the HDO step, the pressure and the temperature range typically between 20 and 150 bar, and between 200 and 500°C, respectively. In the HDO step, known hydrodeoxygenation catalysts may be used. Prior to the HDO step, the biological raw material may optionally be subjected to prehydrogenation under milder conditions to avoid side reactions of the double bonds. After the HDO step, the product is passed to the isomerization step where hydrogen gas and the biological constituent to be hydrogenated, and optionally a n-paraffin mixture, are passed to the isomerization catalyst bed either in concurrent or countercurrent manner. In the isomerization step, the pressure and the temperature range between typically 20 and 150 bar, and between 200 and 500°C, respectively. In the isomerization step, isomerization catalysts known as such may be typically used.

Secondary process steps can also be present (such as intermediate pooling, scavenging traps, and the like).

The product issued from the HDO/ISO steps may for instance be fractionated to give the desired fractions.

Various HDO/ISO processes are disclosed in the literature. WO2014/033762 discloses a process which comprises a pre-hydrogenation step, a hydrodeoxygenation step (HDO) and an isomerization step which operates using the countercurrent flow principle. EP1728844 describes a process for the production of hydrocarbon components from mixtures of a vegetable or animal origin. The process comprises a pretreatment step of the mixture of a vegetable origin for removing contaminants, such as, for example, alkaline metal salts, followed by a hydrodeoxygenation (HDO) step and an isomerization step. EP2084245 describes a process for the production of a hydrocarbon mixture that can be used as diesel fuel or diesel component by the hydrodeoxygenation of a mixture of a biological origin containing fatty acid esters possibly with aliquots of free fatty acids, such as for example vegetable oils such as sunflower oil, rape oil, canola oil, palm oil, or fatty oils contained in the pulp of pine trees (tall oil), followed by hydroisomerization on specific catalysts. EP2368967 discloses such a process and the thus-obtained product.

Company Nesté Oy has developed specific HDO/ISO processes, and is currently marketing products thus obtained, under the tradename NexBTL® (diesel, aviation fuel, naphtha, isoalkane). This NexBTL® is an appropriate feed for use in the present invention. The NEXBTL feed is further described at http://en.wikipedia.org/wiki/NEXBTL and/or at the neste oy website.

The feedstock or simply feed may, according a second variant, be a feed which is the result of a process of conversion of syngas into hydrocarbons suitable for further processing as a feedstock. Syngas typically comprises hydrogen and carbon monoxide and possibly minor other components, like carbon dioxide. A preferred syngas used in the invention is renewable syngas, i.e. syngas from renewable sources (incl. renewable energy sources as detailed below).

Representative of possible syngas-based feedstocks are the Gas to liquids (GTL) feedstock, the Biomass to liquids (BTL) feedstock, the renewable Methanol to liquid (MTL) feedstock, renewable steam reforming, and waste-to-energy gasification, as well as more recent methods using renewable energy (solar energy, wind energy) to convert carbon dioxide and hydrogen into syngas. An example of this later process is the audi® e-diesel feedstock process. The term syngas also extends to any source of material that can be used in a Fischer Tropsch process, such as methane-rich gases (which may use syngas as intermediate).

The syngas to liquids (STL) process is a refinery process that converts gaseous hydrocarbons into longer-chain hydrocarbons such as gasoline or diesel fuel. Renewable methane-rich gases are converted into liquid synthetic fuels either via direct conversion or via syngas as an intermediate, for example using the Fischer Tropsch process, Methanol to Gasoline process (MTG) or Syngas to gasoline plus process (STG+). For the Fischer Tropsch process, the effluents produced are Fischer-Tropsch derived.

By "Fischer-Tropsch derived" is meant that a hydrocarbon composition is, or derives from, a synthesis product of a Fischer-Tropsch condensation process. The Fischer-Tropsch reaction converts carbon monoxide and hydrogen (syngas) into longer chain, usually paraffinic hydrocarbons. The overall reaction equation is straightforward (but hide mechanistic complexity):

$$n(CO + 2H_2) = (-CH_2-)n + nH_2O + heat,$$

in the presence of an appropriate catalyst and typically at elevated temperatures (e.g., 125 to 300°C, preferably 175 to 250°C) and/or pressures (e.g., 5 to 100 bars, preferably 12 to 50 bars). Hydrogen: carbon monoxide ratios other than 2:1 may be employed if desired. The carbon monoxide and hydrogen may themselves be derived from organic or inorganic, natural or synthetic sources, typically either from natural gas or from organically derived methane. For example, it can also be derived from biomass or from coal.

The collected hydrocarbon composition containing a continuous iso-paraffinic series as described above may preferably be obtained by hydroisomerisation of a paraffinic wax, preferably followed by dewaxing, such as solvent or catalytic dewaxing. The paraffinic wax is preferably a Fischer-Tropsch derived wax.

Hydrocarbon cuts may be obtained directly from the Fischer-Tropsch reaction, or indirectly for instance by fractionation of Fischer-Tropsch synthesis products or preferably from hydrotreated Fischer-Tropsch synthesis products.

Hydrotreatment preferably involves hydrocracking to adjust the boiling range (see, e.g., GB-B-2077289 and EP-A-0147873) and/or hydroisomerisation, which can improve cold flow properties by increasing the proportion of branched paraffins. EP-A-0583836 describes a two-step hydrotreatment process in which a Fischer-Tropsch synthesis product is firstly subjected to hydroconversion under conditions such that it undergoes substantially no isomerisation or hydrocracking (this hydrogenates the olefinic and oxygen-containing components), and then at least part of the resultant product is hydroconverted under conditions such that hydrocracking and isomerisation occur to yield a substantially paraffinic hydrocarbon fuel. It is possible to adjust the isomerization process so as to obtain mainly isoparaffins with the required carbon distribution. The syngas-based feedstock is isoparaffinic in nature as it contains more than 90% isoparaffins.

Other post-synthesis treatments, such as polymerisation, alkylation, distillation, cracking-decarboxylation, isomerisation and hydroreforming, may be employed to modify the properties of Fischer-Tropsch condensation products, as described for instance in US-A-4125566 and US-A-4478955. Examples of Fischer-Tropsch processes which for example can be used to prepare the above-described Fischer-Tropsch derived collected hydrocarbon composition are the so-called commercial Slurry Phase Distillate technology of Sasol, the Shell Middle Distillate Synthesis Process and the "AGC-21" Exxon Mobil process. These and other processes are for example described in more details in EP-A-776959, EP-A-668342, US-A-4943672, US-A-5059299, WO-A-9934917 and WO-A-9920720.

The desired fraction(s) may subsequently be isolated for instance by distillation.

Feedstocks typically contain less than 15 ppm of sulphur, preferably less than 8 ppm and more preferably less than 5 ppm, especially less than 1 ppm, as measured according to EN ISO 20846. Typically the feedstocks will comprise no sulphur as being biosourced products.

Before entering the hydrogenation unit, a pre-fractionation step can take place. Having a more narrow boiling range entering the unit allows having a more narrow boiling range at the outlet. Indeed typical boiling ranges of pre-fractionated cuts are 220 to 330°C while cuts without a pre-fractionating step typically have a boiling range from 150°C to 360°C.

The feedstock issued from HDO/ISO or from syngas is then hydrogenated. The feedstock can optionally be pre-fractionated.

Hydrogen that is used in the hydrogenation unit is typically a high purity hydrogen, e.g. with a purity of more than 99%, albeit other grades can be used.

Hydrogenation takes place in one or more reactors. The reactor can comprise one or more catalytic beds. Catalytic beds are usually fixed beds.

Hydrogenation takes place using a catalyst. Typical hydrogenation catalysts include but are not limited to: nickel, platinum, palladium, rhenium, rhodium, nickel tungstate, nickel molybdenum, molybdenum, cobalt molybdenate, nickel molybdenate on silica and/or alumina carriers or zeolites. A preferred catalyst is Ni-based and is supported on an alumina carrier, having a specific surface area varying between 100 and 200 $m^2$/g of catalyst.

The hydrogenation conditions are typically the following:

- Pressure: 50 to 160 bars, preferably 80 to 150 bars, and most preferably 90 to 120 bars or 100 to 150 bars;
- Temperature: 80 to 180°C, preferably 120 to 160°C and most preferably 150 to 160°C;
- Liquid hourly space velocity (LHSV) : 0.2 to 5 $hr^{-1}$, preferably 0.4 to 3, and most preferably 0.5 to 0.8;
- Hydrogen treat rate: adapted to the above conditions, which can be up to 200 $Nm^3$/ton of feed.

The temperature in the reactors can be typically about 150-160°C and the pressure can be typically about 100 bars while the liquid hourly space velocity can be typically about $0.6h^{-1}$ and the treat rate is adapted, depending on the feed quality and the first process parameters.

The hydrogenation process of the invention can be carried out in several stages. There can be two or three stages, preferably three stages, preferably in three separate reactors. The first stage will operate the sulphur trapping, hydrogenation of substantially all unsaturated compounds, and up to about 90% of hydrogenation of aromatics. The flow exiting from the first reactor contains substantially no sulphur. In the second stage the hydrogenation of the aromatics continues, and up to 99% of aromatics are hydrogenated. The third stage is a finishing stage, allowing an aromatic content as low as 100 ppm by weight or even less such as below 50 ppm, more preferably less than 20 ppm, even for high boiling products.

The catalysts can be present in varying or substantially equal amounts in each reactor, e.g. for three reactors according to weight amounts of 0.05-0.5/0.10-0.70/0.25-0.85, preferably 0.07-0.25/0.15-0.35/0.4-0.78 and most preferably 0.10-0.20/0.20-0.32/0.48-0.70.

It is also possible to have one or two hydrogenation reactors instead of three.

It is also possible that the first reactor be made of twin reactors operated alternatively in a swing mode. This may be useful for catalyst charging and discharging: since the first reactor comprises the catalyst that is poisoned first (substantially all the sulphur is trapped in and/or on the catalyst) it should be changed often.

One reactor can be used, in which two, three or more catalytic beds are installed.

It may be necessary to insert quenches on the recycle to cool effluents between the reactors or catalytic beds to control reaction temperatures and consequently hydrothermal equilibrium of the hydrogenation reaction. In a preferred embodiment, there is no such intermediate cooling or quenching.

In case the process makes use of 2 or 3 reactors, the first reactor will act as a sulphur trap. This first reactor will thus trap substantially all the sulphur. The catalyst will thus be saturated very quickly and may be renewed from time to time. When regeneration or rejuvenation is not possible for such saturated catalyst the first reactor is considered as a sacrificial reactor which size and catalyst content both depend on the catalyst renewal frequency.

In an embodiment, the resulting product and/or separated gas is/are at least partly recycled to the inlet of the hydrogenation stages. This dilution helps, if this were to be needed, maintaining the exothermicity of the reaction within controlled limits, especially at the first stage. Recycling also allows heat-exchange before the reaction and also a better control of the temperature.

The stream exiting the hydrogenation unit contains the hydrogenated product and hydrogen. Flash separators are used to separate effluents into gas, mainly remaining hydrogen, and liquids, mainly hydrogenated hydrocarbons. The process can be carried out using three flash separators, one of high pressure, one of medium pressure, and one of low pressure, very close to atmospheric pressure.

The hydrogen gas that is collected on top of the flash separators can be recycled to the inlet of the hydrogenation unit or at different levels in the hydrogenation units between the reactors.

Because the final separated product is at about atmospheric pressure, it is possible to feed directly the fractionation stage, which is preferably carried out under vacuum pressure that is at about between 10 to 50 mbars, preferably about 30 mbars.

The fractionation stage can be operated such that various hydrocarbon fluids can be withdrawn simultaneously from the fractionation column, and the boiling range of which can be predetermined.

Therefore, fractionation can take place before hydrogenation, after hydrogenation, or both.

The hydrogenation reactors, the separators and the fractionation unit can thus be connected directly, without having to use intermediate tanks. By adapting the feed, especially the initial and final boiling points of the feed, it is possible to produce directly, without intermediate storage tanks, the final products with the desired initial and final boiling points. Moreover, this integration of hydrogenation and fractionation allows an optimized thermal integration with reduced number of equipment and energy savings.

The bio-sourced fluids as mentioned above possess outstanding properties, in terms of aniline point or solvency power, molecular weight, vapour pressure, viscosity, defined evaporation conditions for systems where drying is important, and defined surface tension.

The bio-sourced fluids are primarily isoparaffinic and contain more than 95% isoparaffins, preferably more than 98%.

The bio-sourced fluids typically contain less than 3% by weight of naphthens, preferably less than 1% and advantageously less than 500 ppm and even less than 50 ppm by weight.

Typically, the bio-sourced fluids comprise carbon atoms number from 6 to 30, preferably 8 to 24 and most preferably from 9 to 20 carbon atoms. The fluids especially comprise a majority, i.e. more than 90% by weight, of molecules with from 14 to 18 carbon atoms as isoparaffins. Preferred bio-sourced fluids are those comprising by weight, from 60 to 95%, preferably 80 to 98%, of isoparaffins selected from the group consisting of C15 isoparaffins, C16 isoparaffins, C17 isoparaffins, C18 isoparaffins and mixtures of two or more thereof.

Preferred bio-sourced fluids comprise:

- C15 isoparaffins and C16 isoparaffins in a combined amount of 80 to 98%; or
- C16 isoparaffins, C17 isoparaffins and C18 isoparaffins in a combined amount of 80 to 98%; or
- C17 isoparaffins and C18 isoparaffins in a combined amount of 80 to 98%.

Examples of preferred bio-sourced fluids are those comprising:

- from 30 to 70% of C15 isoparaffins and from 30 to 70% C16 isoparaffins, preferably from 40 to 60% of C15 isoparaffins and from 35 to 55% C16 isoparaffins;
- from 5 to 25% of C15 isoparaffins, from 30 to 70% C16 isoparaffins and from 10 to 40% of C17 isoparaffins, preferably from 8 to 15% of C15 isoparaffins, from 40 to 60% C16 isoparaffins and from 15 to 25% of C17 isoparaffins;

- from 5 to 30% of C17 isoparaffins and from 70 to 95% C18 isoparaffins, preferably from 10 to 25% of C17 isoparaffins and from 70 to 90% C18 isoparaffins.

The bio-sourced fluids exhibit a specific branching distribution.

Branching rates of isoparaffins as well as carbon distribution is determined using the NMR method (as well as GC-MS) and determination of each type of carbon (with no hydrogen, with one, two or three hydrogens). C quat sat represents the saturated quaternary carbon, CH sat represents the saturated carbon with one hydrogen, $CH_2$ sat represents the saturated carbon with two hydrogens, $CH_3$ sat represents the saturated carbon with three hydrogens, $CH_3$ long chain and $CH_3$ short chain represent the $CH_3$ group on a long chain and a short chain, respectively where the short chain is one methyl group only and a long chain is a chain having at least two carbons. The sum of $CH_3$ long chain and $CH_3$ short chain is $CH_3$ sat.

The bio-sourced fluids typically comprise carbon expressed as Cquat less than 3%, preferably less than 1% and more preferably about 0%.

The bio-sourced fluids typically comprise carbon expressed as CH sat less than 20%, preferably less than 18% and more preferably less than 15%.

The bio-sourced fluids typically comprise carbon expressed as $CH_2$ sat more than 40%, preferably more than 50% and more preferably more than 60%.

The bio-sourced fluids typically comprise carbon expressed as $CH_3$ sat less than 30%, preferably less than 28% and more preferably less than 25%.

The bio-sourced fluids typically comprise carbon expressed as $CH_3$ long chain less than 20%, preferably less than 18% and more preferably less than 15%.

The bio-sourced fluids typically comprise carbon expressed as $CH_3$ short chain less than 15%, preferably less than 10% and more preferably less than 9%.

The bio-sourced fluids have a boiling range from 200 to 400°C and also exhibit an enhanced safety, due to the very low aromatics content.

The bio-sourced fluids typically contain less than 100 ppm, more preferably less than 50 ppm, advantageously less than 20 ppm aromatics (measured using a UV method). This makes them suitable for use in crop protection fluids. This is especially useful for high temperature boiling products, typically products boiling in the range 300-400°C, preferably 320-380°C.

The boiling range of the bio-sourced fluids is preferably not more than 80 °C, preferably not more than 70 °C, more preferably not more than 60°C, more preferably between 35 and 50°C and advantageously between 40 and 50°C.

The bio-sourced fluids also have an extremely low sulphur content, typically less than 5 ppm, even less than 3 ppm and preferably less than 0.5 ppm, at a level too low to be detected by the usual low-sulphur analyzers.

The Initial Boiling Point (IBP) to Final Boiling Point (FBP) range is selected according to the particular use and composition. An Initial Boiling Point of more than 250°C allows classification as free of VOC (Volatile Organic Compounds) according to the directive 2004/42/CE.

Biodegradation of an organic chemical refers to the reduction in complexity of the chemical through metabolic activity of microorganisms. Under aerobic conditions, microorganisms convert organic substances into carbon dioxide, water and biomass. OECD 306 method, is available for assessing biodegradability of individual substances in seawater. OECD Method 306 can be carried out as either a shake flask or Closed Bottle method and the only microorganisms added are those microorganisms in the test seawater to which the test substance is added. In order to assess the biotic degradation in seawater, a biodegradability test was performed which allows the biodegradability to be measured in seawater. The biodegradability was determined in the Closed Bottle test performed according to the OECD 306 Test Guidelines. The biodegradability of the bio-sourced fluids is measured according to the OECD Method 306.

The OECD Method 306 is the following:
The closed bottle method consists on dissolution of a pre-determined amount of the test substance in the test medium in a concentration of usually 2-10 mg/I, with one or more concentrations being optionally used. The solution is kept in a filled closed bottle in the dark in a constant temperature bath or enclosure controlled within a range of 15-20°C. The degradation is followed by oxygen analyses over a 28-day period. Twenty-four bottles are used (8 for test substance, 8 for reference compound and 8 for sweater plus nutriment). All analyses are performed on duplicate bottles. Four determinations of dissolved oxygen, at least, are performed (day 0, 5, 15 and 28) using a chemical or electrochemical method.

Results are thus expressed in % degradability at 28 days. The bio-sourced fluids have a biodegradability at 28 days of at least 60%, as measured according to the OECD 306 standard, preferably at least 70% by weight, more preferably at least 75% and advantageously at least 80%.

The carbon of a biomaterial comes from the photosynthesis of the plants and thus of atmospheric $CO_2$. The degradation (by degradation, one will understand also combustion/incineration at the end of the lifetime) of these $CO_2$ materials thus does not contribute to the warming since there is no increase in the carbon emitted in the atmosphere. The assessment $CO_2$ of the biomaterials is thus definitely better and contributes to reduce the print carbon of the products obtained (only energy for manufacture is to be taken into account). On the contrary, a fossil material of origin being also degraded out of $CO_2$ will contribute to the increase in the $CO_2$ rate and thus to climate warming. The bio-sourced fluids according to the invention will thus have a print carbon which will be better than that of compounds obtained starting from a fossil source.

The term of "bio-carbon" indicates that carbon is of natural origin and comes from a biomaterial, as indicated hereafter. The content of biocarbon and the content of biomaterial are expressions indicating the same value.

A renewable material of origin or biomaterial is an organic material in which carbon comes from $CO_2$ fixed recently (on a human scale) by photosynthesis starting from the atmosphere. On ground, this $CO_2$ is collected or fixed by the plants. At sea, $CO_2$ is collected or fixed by microscopic bacteria or plants or algae carrying out a photosynthesis. A biomaterial (carbon natural origin 100%) presents an isotopic ratio $^{14}C/^{12}C$ higher than $10^{-12}$, typically about $1.2 \times 10^{-12}$, while a fossil material has a null ratio. Indeed, the isotope $^{14}C$ is formed in the atmosphere and is then integrated by photosynthesis, according to a scale of time of a few tens of years at the maximum. The half-life of $^{14}C$ is 5730 years. Thus the materials resulting from photosynthesis, namely the plants in a general way, have necessarily a maximum content of isotope $^{14}C$.

The determination of the content of biomaterial or content of biocarbon is given pursuant to standards ASTM D 6866-12, method B (ASTM D 6866-06) and ASTM D 7026 (ASTM D 7026-04). Standard ASTM D 6866 concerns "Determining the Biobased Content of Natural Range Materials Using Radiocarbon and Isotope Ratio Mass Spectrometry Analysis", while standard ASTM D 7026 concerns "Sampling and Reporting of Results for Determination of Biobased Content of Materials via Carbon Isotope Analysis". The second standard mentions the first in its first paragraph.

The first standard describes a test of measurement of the ratio $^{14}C/^{12}C$ of a sample and compares it with the ratio $^{14}C/^{12}C$ of a sample renewable reference of origin 100%, to give a relative percentage of C of origin renewable in the sample. The standard is based on the same concepts that the dating with $^{14}C$, but without making application of the equations of dating. The ratio thus calculated is indicated as the "pMC" (percent Modern Carbon). If the material to be analyzed is a mixture of biomaterial and fossil material (without radioactive isotope), then the value of pMC obtained is directly correlated with the quantity of biomaterial present in the sample. The value of reference used for the dating to $^{14}C$ is a value dating from the years 1950. This year was selected because of the existence of nuclear tests in the atmosphere which introduced great quantities of isotopes into the atmosphere after this date. The reference 1950 corresponds to a value pMC of 100. Taking into account the thermonuclear tests, the current value to be retained is approximately 107.5 (what corresponds to a factor of correction of 0.93). The signature into radioactive carbon of a current plant is thus of 107.5. A signature of 54 pMC and 99 pMC thus correspond to a quantity of biomaterial in the sample of 50% and 93%, respectively.

The bio-sourced fluid according to the invention comes at least partly from biomaterial and thus presents a content of biomaterial from at least 95%. This content is advantageously even higher, in particular more than 98%, more preferably more than 99% and advantageously about 100%. The bio-sources fluids according to the invention can thus be bio-carbon of 100% biosourced or on the contrary to result from a mixture with a fossil origin. According to an embodiment, the isotopic ratio $^{14}C/^{12}C$ is between 1.15 and $1.2 \times 10^{-12}$.

All percentages and ppm are by weight unless indicated to the contrary. Singular and plural are used interchangeably to designate the fluid(s).

The details of the bio-sourced fluids according to the invention are described in the patent application WO 2018/078023.

*Composition according to the invention*

According to an embodiment, the composition according to the invention has a kinematic viscosity measured at 40°C according to ASTM D445, comprised from 1 $mm^2/s$ to 30 $mm^2/s$, preferably from 5 $mm^2/s$ to 15 $mm^2/s$, and more preferably from 9 $mm^2/s$ to 11 $mm^2/s$..

According to an embodiment, the volume ratio of the seed extraction oil and the bio-sourced fluid is comprised from 0.1 to 10, preferably from 0.5 to 5, more preferably from 0.8 to 1.2, and more preferentially is equal to 1.

The volume ratio of the seed extraction oil and the bio-sourced fluid can influence the kinematic viscosity measured at 40°C of the composition according to the invention. Therefore, by controlling the volume ratio of the seed extraction oil and the bio-sourced fluid, the kinematic viscosity measured at 40°C of the composition according to the invention can be finely tuned within the ideal range for application.

According to an embodiment, the composition according to the invention has a sulfur content of less than 10 ppm, preferably less than 5 ppm, more preferably less than 3 ppm The sulfur content is for example measured according to ASTM D4294 standard.

According to an embodiment, the composition according to the invention further comprises at least one additive selected from non-ionic surfactants. According to the invention, the surfactant, also called emulsifier, is an amphiphilic compound comprising at least a water repellent part and at least a water attracting part.

According to an embodiment, the amount of non-ionic surfactant(s) in the composition of the invention ranges from 0.1% to 5%, preferably from 0.5% to 3%, and more preferably from 1% to 2% by mass, based on the total mass of the composition.

According to an embodiment, the non-ionic surfactant(s) in the composition according to the invention is(are) selected from non-ionic surfactants based on fatty alcohol alkoxylate, in particular the polyoxyethylene. In particular the non-ionic surfactants are selected from Emulsogen® MTP 070 sold by Clariant International Ltd., and Ultravan JU sold by ARK Chemicals, Kolkata, India.

The presence of at least one surfactant in the composition according to the invention facilitates the formation of the emulsion and improves its stability.

According to an embodiment, the composition according to the invention is substantially free of petroleum-based oils.

Petroleum-based oils refer to oils derived from the refining and processing of crude oils. These petroleum-based oils are typically obtained through a series of chemical processes such as distillation, cracking, and reforming, that extract hydrocarbons from crude petroleum.

According to the invention, "substantially free" means that the composition according to the invention comprises preferably less than 0.5% by mass, preferably less than 0.3% by mass, more preferably less than 0.1% by mass of petroleum-based oils with respect to the total mass of the composition. Preferably, the composition according to the invention is devoid of petroleum-based oils.

According to an embodiment, the composition according to the invention further comprises water.

Preferably, the composition according to the invention is in the form of emulsion.

According to an embodiment, the composition according to the invention is an oil-in water emulsion.

An emulsion according to the invention refers to a mixture comprising at least two liquid phases that are immiscible. For example, an emulsion may comprise an oil phase and an aqueous phase. When the oil phase is dispersed in the aqueous phase, the oil phase is called the dispersed phase, and the aqueous phase is called the continuous phase. Then this kind of emulsion is called an oil-in-water emulsion.

The present invention also relates to an emulsion comprising:

- at least one seed extraction oil comprising at least one fatty acid comprising from 8 to 24 carbon atoms, said seed extraction oil having a kinematic viscosity measured at 40°C according to ASTM D445 from 25 $mm^2/s$ to 45 $mm^2/s$;
- at least one bio-sourced fluid having a kinematic viscosity measured at 40°C according to ASTM D445 from 3 to 6 $mm^2/s$, a flash point of higher than 120°C and a pour point lower than -40°C, having a boiling point in the range of from 200 °C to 400°C and a boiling range below 80°C, said fluid comprising more than 95% isoparaffins and less than 3% of naphthens by mass, a biocarbon content of at least 95% by mass, containing less than 100 ppm aromatics by mass; and
- water.

According to an embodiment, the emulsion of the invention comprises or consists of:

- a date seed oil;
- a bio-sourced fluid as defined above; and
- water.

According to an embodiment, the emulsion comprises from 70% to 99% by mass, preferably from 80% to 97% by mass, more preferably from 90% to 95% by mass of water, with respect to the total mass of the emulsion.

According to an embodiment, the emulsion comprises from 1% to 20% by mass, preferably from 3% to 10% by mass, more preferably from 5% to 7% by mass of a mixture of the seed extraction oil and the bio-sourced fluid, with respect to the total mass of the emulsion.

The present invention further concerns the use of the compositions according to the invention for treating textile fiber in the process of textile fiber production.

The process of textile fiber production according to the invention may comprise a series of treatment including:

- the production of raw textile fibers from stem and/or ribbon of the plant via retting;
- the selection of raw textile fibers, wherein raw textile fibers are sorted to ensure uniformity in length and color, whilst assessing the quality;
- the piling/batching of the sorted raw textile fibers to produce loose and softened textile fibers, wherein a lubricant oil along with water is applied on the textile fibers;
- the carding step, wherein the loose and softened textile fibers are aligned and cleaned to remove any impurities or irregularities; and
- the spinning step, wherein the carded textile fibers are twisted to form yarn.

The produced yarns can be further weaved and/or colored to produce fabrics for clothes, bags, mats, etc., according to the eventual application conditions.

According to an embodiment, the compositions or the emulsions according to the invention are applied to the textile fibers in the piling/batching stage, for the purpose of making textile fibers pliable and flexible.

According to an embodiment, the compositions or the emulsions according to the invention comprise:

- from 10% to 50% by mass, preferably from 20% to 40% by mass of water with respect to the total mass of fibers to be treated;
- from 1% to 5% by mass, preferably from 1.5% to 3% by mass of the mixture of the seed extraction oil and the bio-sourced fluid with respect to the total mass of fibers to be treated; and
- from 0.1% to 1% by mass, preferably from 0.3% to 0.7% by mass of non-ionic surfactants with respect to the total mass of fibers to be treated.

According to an embodiment, the above-mentioned textile fibers are selected from jute, wool, linen, and cotton fibers. Preferably, the textile fiber is jute fiber.

The present invention also relates to the use of the compositions or the emulsions as defined above for treating jute fibers in the piling/batching stage of the process of jute fiber production.

The present invention also concerns a process for treating textile fibers comprising a step of applying the composition or the emulsion according to the invention on the textile fibers.

According to an embodiment, the process of the invention consists in treating textile fibers, preferably jute fibers, by applying the composition or the emulsion according to the invention on the surface of the textile fibers.

The process for treating textile fibers according to the invention includes a step consisting in the application of the composition as defined above or the emulsion as defined above on the textile fibers surface. According to an embodiment, the process includes usual steps for treatment of textile fibers, such as those well-known to the skilled person.

Preferably, the process according to the invention comprises a preliminary step of application of the composition or emulsion according to the invention, followed by steps of a process for treating textile fibers. Such steps may include processing in softener, carding, drawing, spinning, and winding steps.

According to an embodiment, the composition or the emulsion according to the invention is applied on textile fibers by any methods known by the skilled person, for example, by spraying, painting or immersing the textile fibers in the composition or the emulsion according to the invention. Preferably, the composition or the emulsion according to the invention is sprayed on textile fibers.

The below examples illustrate the invention without limiting it:

## EXAMPLES

### Example 1: Preparation of the compositions of the invention

Two different compositions were prepared, among which C1 is a composition according to the invention, while CC1 is a comparative composition, which is a kerosene-based conventional jute batching oil with a content of polycyclic aromatic hydrocarbon (PAH) content of 4.8 ppm, sold by Indian Oil Corporation Ltd.....

All the tested compositions C1 and CC1 were prepared according to the usual protocols that are well known from the skilled person.

The components of the date seed oil and the bio-sourced fluid used in composition C1 are listed below:

For the date seed oil:

| Ingredients | Content (w/w, %) |
| --- | --- |
| % oleic acid | 31.8 |
| % lauric acid | 7.84 |
| % palmitic acid | 5.72 |
| % myristic acid | 3.55 |
| % stearic acid | 1.85 |
| Sulfur content (ppm) | 3.7 |

For the bio-sourced fluid:

| Characteristic | Content |
|---|---|
| Aromatic content (ppm) | <20 |
| Sulfur content (ppm) | 0.1 |
| % isoparaffins (w/w) | 95.1 |
| % n-paraffins (w/w) | 4.9 |
| % naphthenic (w/w) | 0 |
| % C15 (iso) | 11.45 |
| % C16 (iso) | 47.89 |
| % C17 (iso) | 18.57 |
| % C18 (iso) | 17.07 |
| % C quat sat | 0 |
| % CH sat | 10.9 |
| % $CH_2$ sat | 67.8 |
| % $CH_3$ sat | 21.2 |
| % $CH_3$ long chain | 13.3 |
| % $CH_3$ short chain | 8 |
| Biocarbon content (%) | 97 |

Then, the characteristics of the composition according to the invention C1 are listed below:

| Ingredients | C1 |
|---|---|
| Date seed oil (v/v, %) | 50 |
| Bio-sourced fluid (v/v, %) | 50 |
| Sulfur content (ppm) | 2.6 |
| PAH content (ppm) | < 2 |

## Example 2: Physical and chemical properties of the compositions

The following standards have been used to determine the following properties:

| | |
|---|---|
| Viscosity at 40°C | ASTM D445 |
| Flash Point | ASTM D93 |
| Density at 15 °C | ASTM D4052 |
| PAH content | EN-16143-2013 |

The physical and chemical properties of compositions C1 and CC1 are listed below:

| Characteristics | C1 | CC1 |
|---|---|---|
| Viscosity at 40°C ($mm^2$/s) | 10.09 | 12.41 |
| Odor | no distinguishable odor | light kerosene odor |
| Flash Point °C | 126 | 170 |
| Density at 15 °C, g/$cm^3$ | 0.850 | 0.855 |
| PAH content, ppm | <2 | 5 |

## Example 3: Study of the emulsion stability of the compositions

The compositions C1 and CC1 were mixed with water and non-ionic surfactant at a mass ratio of 0.5/2/30 (non-ionic surfactant/oil/water, w/w %) to produce an emulsion.

Right after the preparation, the emulsions of the compositions C1 and CC1 were separately introduced into open beakers.

Then the beakers were placed on a flat surface, under room temperature of 25°C and kept still for 8 days.

The state of the emulsion was observed during the 8 days.

The experiment was repeated three times.

It was observed that:

Both of the prepared emulsions remained stable and unchanged over the first six hours;

24 hours after the emulsion preparation, the phase separation can be observed in both of the emulsions; and

192 hours after the emulsion preparation, the phase separation in composition C1 turned out to be less severe than that in composition CC1, because the lower layer of C1 is less opaque and white with respect to CC1.

In conclusion, the composition C1 shows the better emulsion stability in comparison to comparative composition CC1, suggesting that the compositions according to the invention exhibit a better emulsion stability than conventional jute batching oils.

## Example 4: Study of the process ability and mechanical properties of yarn produced by jute fibers treated with compositions according to the invention

Jute yarn of nominal count 280 g/km (3.63 kg) as prepared in conventional jute spinning system. The raw jute reed was passed through a softener machine after spraying with emulsion (oil/water=2/30, w/w%) of one of the above-mentioned compositions (C1 and CC1) and thereafter was binned for 24 hours. Then the jute fibers treated with the emulsion were processed through a breaker card and a finisher card to produce the jute sliver. The produced jute sliver was further processed in three gill drawing frame sequentially. After the process of drawing, yarn was prepared in a spinning frame with twist multiplier 26.9.

In the process ability study, dropping amount of waste generated in carding, breakage/km in spinning, moisture after conditioning, carding, drawing and spinning were tested.

The produced yarn was further processed by winding, and afterwards, yarn strength, elongation, count cv% were studied after conditioning at a temperature of 25°C and a relative humidity of 65%.

The standard methods of processing and testing are listed below:

| Test | Norm |
|---|---|
| Moisture content | ASTM D2654-22 |
| Linear density, tex | IS 570, 2023 |
| Tenacity, cN/tex | Instron Tesile Tester. Test length 30 cm, Cross head |
| Elongation, % | speed 25 cm/min (IS 1670-1991) |
| Yarn appearance | Paramount Yarn Appearance tester. Visual evaluation of yarn appearance using black board winding (ASTM 2255-2020) |

The protocols of the carding waste measurement, the yarn breakage test and the winding breakage test are described below:

Carding waste measurement: A clean plastic sheet is laid on floor below the carding rollers before processing 5 kg lot of feed materials. After processing, the plastic sheet is taken out and the dropping waste mostly containing darts, dusts, short fibers, hard materials of stem and barks is collected carefully and is weighted in microbalance. Then the weight of dropping waste is converted to percentage of total feed materials according to the equation 1:

$$[\text{Equation 1}] \quad Carding\ dropping\ waste\ (\%) = \frac{Weight\ of\ dropping\ waste\ (kg)}{5\ kg} \times 100\%$$

Spinning yarn Breakage: During the one-hour yarn spinning processing, yarns are produced by five selected spinning spindles. The total number of yarn spinning breakages is recorded and the total yarn length is measured. Then the spinning yarn breakage per kilometer is calculated according to the equation 2:

$$[\text{Equation 2}] \quad Spinning\ yarn\ breakage/km = \frac{Total\ number\ of\ spinning\ breakages}{Total\ length\ of\ yarns\ (km)}$$

Winding breakage: During the one-hour yarn winding processing, yarns are produced by five selected winding spindles. The total number of yarn winding breakages is recorded and the total yarn length is measured. Then the winding breakage per kilometer is calculated according to the equation 3:

$$[\text{Equation 3}] \quad Winding\ breakage/km = \frac{Total\ number\ of\ winding\ breakages}{Total\ length\ of\ yarns\ (km)}$$

The results of the process ability tests are listed below:

| Test | Yarn treated by C1 | Yarn treated by CC1 |
|------|--------------------|--------------------|
| Carding dropping waste, % | 2.19 | 2.02 |
| Spinning yarn breakage/km | 0.12 | 0.14 |
| Winding breakage/km | 0 | 0 |
| Moisture content: After conditioning, % | 27.35 | 22.19 |
| Moisture content: After carding, % | 19.53 | 16.65 |
| Moisture content: After drawing, % | 18.16 | 13.59 |
| Moisture content: Yarn, % | 14.13 | 11.92 |
| Linear Density, tex | 8.19±2.31 | 8.14±2.34 |
| Yarn tenacity, cN/tex | 12.91±14.77 | 12.22±14.95 |
| Elongation, % | 1.61±13.47 | 1.69±11.92 |

According to the test results, yarns prepared by jute fibers treated with a composition according to the invention C1 exhibit similar process ability to yarns prepared by jute fibers treated by comparative composition CC1, as proved by the similar test results of carding dropping waste, spinning yarn breakage, winding breakage, linear density, and elongation.

In addition, yarns prepared by jute fibers treated with a composition C1 according to the invention show better capacity in retaining water than those treated with comparative composition CC1, as higher moisture contents were found after processing steps of conditioning, carding, drawing, as well as in the produced yarns.

In conclusion, these tests show that the compositions according to the invention provide a desired improvement in process ability and mechanical properties of treated jute fibers, which is equivalent to or even superior to the improvement provided by the conventional jute batching oils.

**Claims**

1.  A composition comprising :

    - at least one seed extraction oil comprising at least one fatty acid comprising from 8 to 24 carbon atoms, said seed extraction oil having a kinematic viscosity measured at 40°C according to ASTM D445 from 25 mm$^2$/s to 45 mm$^2$/s; and
    - at least one bio-sourced fluid having a kinematic viscosity measured at 40°C according to ASTM D445 from 3 to 6 mm$^2$/s, a flash point of higher than 120°C and a pour point lower than -40°C, having a boiling point in the range of from 200 °C to 400°C and a boiling range below 80°C, said fluid comprising more than 95% isoparaffins and less than 3% of naphthens by mass, a biocarbon content of at least 95% by mass, containing less than 100 ppm aromatics by mass.

2.  The composition according to claim 1, having a kinematic viscosity measured at 40°C according to ASTM D445, comprised from 1 mm$^2$/s to 30 mm$^2$/s, preferably from 5 mm$^2$/s to 15 mm$^2$/s, and more preferably from 9 mm$^2$/s to 11

mm$^2$/s.

3. The composition according to claim 1 or claim 2, wherein the volume ratio of the seed extraction oil and the bio-sourced fluid is comprised from 0.1 to 10, preferably from 0.5 to 5, more preferably from 0.8 to 1.2, and advantageously is equal to 1.

4. The composition according to any one of claims 1 to 3, wherein the seed extraction oil is a date seed oil.

5. The composition according to any one of claims 1 to 4, wherein the seed extraction oil comprises at least one fatty acid selected from the group consisting of: oleic acid ($C_{18}H_{34}O_2$) (C18:1), lauric acid ($C_{12}H_{24}O_2$) (C12:0), palmitic acid ($C_{16}H_{32}O_2$) (C16:0), myristic acid ($C_{14}H_{28}O_2$) (C14:0), linoleic acid ($C_{18}H_{32}O_2$) (C18:2), stearic acid ($C_{18}H_{36}O_2$) (C18:0), and mixtures thereof.

6. The composition according to any one of claims 1 to 5, having a sulfur content of less than 10 ppm, preferably less than 5 ppm, more preferably less than 3 ppm.

7. The composition according to any one of claims 1 to 6, further comprising at least one additive selected from non-ionic surfactants.

8. The composition according to claim 7, wherein the amount of non-ionic surfactant(s) ranges from 0.1% to 5%, preferably from 0.5% to 3%, and more preferably from 1% to 2% by mass, based on the total mass of the composition.

9. The composition according to any one of claims 1 to 8, further comprising water.

10. The composition according to any one of claims 1 to 9, being in the form of an emulsion.

11. An emulsion comprising the composition according to any one of claims 1 to 9 and water.

12. The use of the composition according to any one of claims 1 to 10, or of the emulsion of claim 11, for treating textile fiber in particular in a process for production of textile fiber.

13. The use according to claim 12, wherein the textile fiber is selected from the group consisting of jute, wool, linen, and cotton fibers.

14. The use according to claim 12 or claim 13, wherein the textile fiber is jute fiber.

15. A process for treating textile fibers comprising a step of applying the composition according to any one of claims 1 to 10 or the emulsion of claim 11, on textile fibers.

**EUROPEAN SEARCH REPORT**

Application Number

EP 24 30 7099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2012/066573 A2 (INDIAN OIL CORP LTD [IN]; BHATNAGAR PANKAJ [IN] ET AL.) 24 May 2012 (2012-05-24) * claim 1 * | 1-15 | INV. C08L91/00 C08L91/06 C10M101/04 D06M13/02 D06M13/184 |
| Y | BASU G ET AL: "Effect of bio-friendly conditioning agents on jute fibre spinning", INDUSTRIAL CROPS AND PRODUCTS, ELSEVIER, NL, vol. 29, no. 2-3, 1 March 2009 (2009-03-01), pages 281-288, XP025951513, ISSN: 0926-6690, DOI: 10.1016/J.INDCROP.2008.05.008 [retrieved on 2008-07-01] * page 282; table 2 * | 1-15 | |
| Y | US 2018/148656 A1 (GERMANAUD LAURENT [FR] ET AL) 31 May 2018 (2018-05-31) * paragraphs [0103], [0104], [0106], [0119]; claim 1 * | 1-15 | TECHNICAL FIELDS SEARCHED (IPC) C10G D06Q |
| A | EL KHATIB SALWA ET AL: "Hydrotreating rice bran oil for biofuel production", EGYPTIAN JOURNAL OF PETROLEUM, vol. 27, no. 4, 1 December 2018 (2018-12-01), pages 1325-1331, XP093274573, ISSN: 1110-0621, DOI: 10.1016/j.ejpe.2018.08.003 * table 1 * | 1-15 | C10M C08L D06M |

The present search report has been drawn up for all claims

| Place of search | Date of completion of the search | Examiner |
|---|---|---|
| Munich | 6 May 2025 | Arz, Marius |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 7099

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | Publication date |
|---|---|---|---|
| WO 2012066573 A2 | 24-05-2012 | NONE | |
| US 2018148656 A1 | 31-05-2018 | AU 2016265462 A1 | 21-12-2017 |
| | | BR 112017024507 A2 | 24-07-2018 |
| | | CA 2985887 A1 | 24-11-2016 |
| | | CN 107690469 A | 13-02-2018 |
| | | EP 3095838 A1 | 23-11-2016 |
| | | EP 3298107 A1 | 28-03-2018 |
| | | IL 255642 A | 31-01-2018 |
| | | JP 2018519374 A | 19-07-2018 |
| | | KR 20180009759 A | 29-01-2018 |
| | | RU 2017141915 A | 20-06-2019 |
| | | US 2018148656 A1 | 31-05-2018 |
| | | WO 2016185046 A1 | 24-11-2016 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014033762 A
- EP 1728844 A
- EP 2084245 A
- EP 2368967 A
- GB 2077289 B
- EP 0147873 A
- EP 0583836 A
- US 4125566 A
- US 4478955 A
- EP 776959 A
- EP 668342 A
- US 4943672 A
- US 5059299 A
- WO 9934917 A
- WO 9920720 A
- WO 2018078023 A